# EUROPEAN PATENT SPECIFICATION

(11) **EP 2 763 388 B1**
(45) Date of publication and mention of the grant of the patent: **19.09.2018**
(21) Application number: 13305129.2
(22) Date of filing: 04.02.2013
(51) Int. Cl.: H04M 11/06, H04M 3/30, H04M 3/22

(54) **Method and device for analyzing and diagnosing physical media in an access network**
Verfahren und Vorrichtung zur Analyse und Diagnose physischer Medien in einem Zugriffsnetzwerk
Procédé et dispositif permettant d'analyser et de diagnostiquer des supports physiques dans un réseau d'accès

(43) Date of publication of application: 06.08.2014
(73) Proprietor: Alcatel Lucent, 91620 Nozay (FR)
(72) Inventor: Wahibi, Issam, 2018 Antwerp (BE); Drooghaag, Benoît, 5000 Namur (BE)
(74) Representative: Nokia Bell Patent Attorneys

(56) References cited:
- EP-A1- 2 107 734
- US-A1- 2011 191 472

## Description

### Field of the invention

The present invention refers to a method, device and computer program product for analyzing and diagnosing physical media in an access network. In particular, embodiments of the present invention may be used in combination with a Digital Line Management (DLM) tool to be used in telecommunication access networks, such as a Digital Subscriber Line (DSL) access network.

### Background

In DSL access networks, Digital Line Management is used in order to manage the configuration of individual telecommunication lines, in particular subscriber lines, of the network. Digital Line Management is a process that configures variable operational parameters of the individual telecommunication lines dynamically and automatically in order to ensure a high quality and stability of the performance of the individual telecommunication lines. Typically, DLM may stabilize the telecommunication lines suffering from technical problems during data transmission over the lines. Moreover, DLM may optimize the configuration parameters of stable lines individually in order to improve the performance of the lines, e. g. increasing the maximum usable bit rate on these lines. Using DLM to stabilize lines that have transmission problems and to optimize stable lines, increases the overall performance of the access network and the availability of the individual telecommunication lines. As a consequence, manual service interventions can often be avoided and the number of help-desk calls by customers of the network is reduced so that the network can be operated cost-efficiently.

When performing DLM tasks, parameters that characterize the stability of the lines are determined during a time window (e. g. several hours, several days or one or more weeks). The stability parameters may include a Meantime Between Error (MTBE) or a Meantime Between Resynchronization (MTBR). Known DLM approaches typically can stabilize an instable line rather rapidly, e. g. after one day in order to minimize the instability impact to the customer. Optimization measures are often more time-consuming. They often require the telecommunication line to be operated into the stable during one week.

Digital Line Management may be performed by monitoring node installed in the access network or connected to the access network. The monitoring node may retrieve measurement results from network elements connected to the telecommunication line, e. g. from an access node, and/or may modify the configuration of this network element.

If some external events occur like sudden weather conditions changes (lightning impact, storms, heavy rains), the DSL lines located in the impacted region could be subject to a transitory disturbance and become very unstable. Such transitory disturbances are usually geographically limited but also limited in time (typically less than one day). Known DLM approaches are configured to react quickly to instabilities and will therefore try to stabilize the lines impacted by a transitory disturbance, e. g. by reducing the maximum bit rate used for data transmission over these lines. Because optimizing the lines works more slowly than stabilizing, the DLM will reconfigure the lines at the original bit rate after a comparatively long time period. As a consequence, known DLM methods reduce the maximum bit rate of the lines for a much longer time than the duration of the transitory disturbance.

The published patent application US 2011/0191472 A1 discloses a method for DLM. According to this method, resynchronizations or errors estimated to have occurred as a result of an area wide event are disregarded for DLM profile selections.

In EP 2 107 734 A1, a method and system for operating an ADSL access network using DLM is disclosed.

### Summary

An object of the present invention is to provide a method, device and computer program product that can improve the Dynamic Line Management (DLM) such that a long-lasting bit rate decrease due to a transitory disturbance in the access network can be avoided. In particular, the present invention aims at anticipating the transitory disturbance.

A method according to claim 1, a device according to claim 11, a monitoring station according to claim 13 and the computer program product according to claim 14 provide a solution to this object.

According to a preferred embodiment, a method for analysing and/or diagnosing physical media in an access network is provided, wherein the method comprises determining a long-term statistical distribution of a parameter that characterises the performance of at least one telecommunication line of the network; determining a short-term statistical distribution of the parameter; comparing the long-term statistical distribution with the short-term statistical distribution; and detecting a transitory disturbance in the at least one telecommunication line depending on said comparing.

By comparing the long-term statistical distribution with the short-term statistical distribution, a transitory disturbance can be detected and the behaviour of the DLM can be adapted to the transitory disturbance.

The transitory disturbances include any external effect to the network, in particular to at least one telecommunication line of the network, like a sudden weather condition change (lightning impact, storms, heavy rain) that adversely impacts the performance and/or stability of at least one telecommunication line of the network and that last over a limited time compared to the total operating time of the telecommunication line. In many cases, the transitory disturbance last over less than one day.

In the preferred embodiment, the method comprises preventing DLM stabilization measures related to the at least one telecommunication line while a transitory disturbance is detected. By preventing the stabilization measures, the configuration parameters of the telecommunication lines are kept unmodified until the end of the transitory disturbances. As a consequence, the network will continue to operate with optimized performance as soon as the transitory disturbances are over. In an embodiment, DLM optimization measures are continued while a transitory disturbance is detected, i.e. only stabilization measures are prevented but not the optimization measures.

In an embodiment, the determining the long-term statistical distribution comprises collecting values of the parameter during a first time window and/or determining the short-term statistical distribution comprises collection the values of the parameter during a second time window, the second time window being shorter than the first time window. In a preferred embodiment, the parameters are collected continuously and both time windows may end at the current time, i.e. a momentary time of execution of the method.

In order to obtain reliable results having a good validity, in an embodiment, the comparing comprises applying a statistical test method on the two statistical distributions.

For example, the test method may include a non-parametric test, preferably a Wilcoxon Rank Sum test, a Mann-Whitney U test, a Kolmogorov-Smirnov test, a Kuiper's test and/or a Cramér-von-Mises test.

In another embodiment, the statistical test method includes a parametric test, preferably, a Student's t-test.

In an embodiment, the comparing comprises deciding on whether or not the short-term statistical distribution is displaced with respect to the long-term statistical distribution in a direction that indicates that a stability level related to the short-term distribution is lower than the stability level related to the long-term distribution. In this embodiment, the parameter is a stability parameter characterizing the stability of at least one telecommunication line of the network. The direction that indicates a lower stability level depends on whether a higher value of the parameter represents a higher stability level than a lower value of the parameter. For example, if the parameter is the MTBE, a displacement of the distribution of this parameter to the left indicates a lower stability level; in this case, said direction of displacement is the left direction. The lower the MTBE, the less stable is the line. However, if the parameter is e.g. a total number of transmission errors in a predefined time interval, e.g. one day, then a displacement of the distribution of that parameter to the right indicates a lower stability level; in this case, said direction of displacement is the right direction. The higher the number of transmission errors per time interval, the less stable is the line.

The method may comprise preventing the stabilization measures if the method has decided that the short-term distribution is displaced with respect to the long-term distribution in the above-described direction. Otherwise, the method may allow DLM stabilization measures.

Preferably, the method comprises continuing the stabilisation measures (i.e. not preventing the stabilisation measures) if a result of said deciding is that the short-term statistical distribution is not displaced with respect to the long-term statistical distribution in the direction that indicates that the stability level related to the short-term distribution is lower than the stability level related to the long-term distribution. In other words, the stabilisation measures are prevented only if the result of said deciding is that the short-term statistical distribution is displaced with respect to the long-term statistical distribution in the direction that indicates that the stability level related to the short-term distribution is lower than the stability level related to the long-term distribution.

Any suitable approach can be applied in order to decide on whether or not the short-term distribution is located to the left or right (depending on said direction of displacement that corresponds to a decrease of the stability level) with respect to the long-term distribution. In one embodiment, said deciding comprises comparing location parameters of the two distributions with each other. In another embodiment said deciding comprises applying a statistical location test to the two distributions.

In an embodiment, the at least one parameter includes a Mean Time Between Errors, MTBE, a Mean Time Between Resynchronizations, MTBR, a maximum bit rate of a telecommunication line of the network and/or an average maximum bit rate of multiple telecommunication lines of the network.

According to a further embodiment, a device for analysing and/or diagnosing physical media in an access network is provided, wherein the device is operable for determining a long-term statistical distribution of a parameter that characterises the performance of at least one telecommunication line of the network; determining a short-term statistical distribution of the parameter; comparing the long-term statistical distribution with the short-term statistical distribution; and detecting a transitory disturbance in the at least one telecommunication line depending on said comparing.

In a preferred embodiment, the device is operable, preferably programmed, for executing a method according to the invention, embodiments of which are described herein.

According to another embodiment, a monitoring station for analysing and/or diagnosing physical media in an access network is provided, the monitoring station comprising a device for analysing and/or diagnosing physical media in an access network according to the invention.

According to yet another embodiment a computer program product, preferably a computer readable storage medium is provided comprising a computer program that is programmed for executing a method according to the invention. The storage medium may comprise magnetic or optical storage like hard discs, tapes or optical disks as well as semiconductor storage like Read Only Memory (ROM), e. g. Flash Memory. Moreover, the computer program product may be provided by a network service for download, e.g. from a server, via a communication network such as the Internet.

### Brief description of the figures

Exemplary embodiments and further advantages of the present invention are shown in the Figures and described in detail hereinafter.
- Figure 1: shows a telecommunication network;
- Figure 2: shows the maximum bit rate of a telecommunication line of the network shown in Figure 1 over time when using DLM;
- Figure 3: shows a flow chart of a method for analyzing and diagnosing physical media in the access network shown in Figure 1; and
- Figure 4: shows schematic diagrams of a long-term statistical distribution and a short-term statistical distribution of a stability parameter.

### Description of the embodiments

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

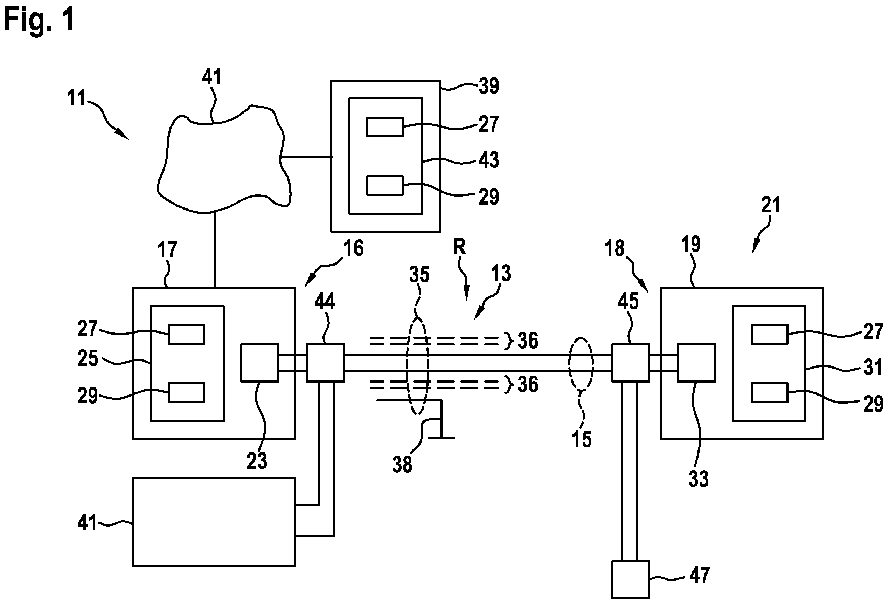

Figure 1 shows a communication network 11 comprising a first telecommunication line 13. A first end 16 of the telecommunication line 13 is connected to a network side termination node of the network 11, further referred to as access node 17, and a second end 18 of the line 13 is connected to a terminal side termination node 19 of the network 11. The terminal side termination node 19 may be part of customer premises equipment (CPE 21) of the network 11.

The first telecommunication line 13 may be a Digital Subscriber Line (DSL) of any type, such as ADSLx or VDSL2, or the like. Consequently, the access node 17 may be a DSL Access Multiplexer (DSLAM) or another type of DSL access node. The terminal side termination node 19 may be a DSL modem or include a DSL modem.

The access node 17 has first modem circuitry 23 to which the first end 16 of the first line 13 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the first line 13 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least a section of the first line 13 is part of a binder 35 and extends in parallel to at least one further telecommunication line 36. The further line 36 may be e.g. a DSL line of any type (e. g. ADSLx or VDSL2). The binder 35 may comprise an electrically conductive, preferably metallic, shielding 38 that may be grounded as depicted in Figure 1.

Furthermore, the network 11 may comprise an optional monitoring station 39 connected e. g. via a interconnection network 41 to at least one of the nodes 17, 19 such that the station 39 can communicate with at least one of the nodes 17, 19, preferably the access node 17. The station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server, a personal computer, a handheld computer such as a PDA or cell phone, etc. In an embodiment, the collection and processing of the measurement data may not be done in the cell phone or laptop, but by a platform server. In this embodiment, the phones are clients that can retrieve the results of the collection and processing from the server.

In the embodiment shown in Figure 1, the telecommunication line 13 is not only used for DSL transmission but also for classical telephone network services such as the Plain Old Telephone Service (POTS) or Integrated Service Digital Network (ISDN) access. To the end, this access network 11 has a POTS or ISDN access device 41 that may be co-located with the access node 17. A first splitter 44 may be inserted in the line 13 close to its first end 16 so that the first end 16 of the line 13 is coupled with the first modem circuitry 23 and a POTS or ISDN line card of the access device 41. Accordingly, the CPE 21 may comprise a second splitter 45 inserted in the first telecommunication line 13 close to its second end 18 so that the first telecommunication line 13 is coupled with the second modem circuitry 33 and network termination or terminal equipment 47 for POTS or ISDN (e.g. an analogue telephone or fax machine or an ISDN network termination device).

In an embodiment, at least one telecommunication line (13, 36) is used for DSL services exclusively and the splitters 44 and 45 are not present at these lines 13, 36. In another embodiment, the access network 11 does not provide access to classical telephone services (POTS or ISDN) at all and the access device 41 is not present. In the CPE 21 connected to a line 13, 36 that does not provide access to classical telephone network services, the network termination or terminal equipment 47 and the second splitter 45 may be omitted.

When operating the network 11, data transmissions over the telecommunication lines 13, 36 take place. A maximum bit rate R available for data transmission over the lines 13, 36 depends on physical characteristics of the lines 13, 36. For example, the length or the gauge of the lines 13, 36 have an influence on the maximum bit rate R. In addition, cross-talk between the lines 13, 36 may limit the maximum available bit rate R. On the monitoring station 39 (or on any other network element of the network 11), dynamic line management (DLM) operation may be carried out.

The DLM operations include optimizing at least one configuration parameter of the devices connected to the telecommunication lines 13, 36, such as the access node 17 and/or the terminal side termination node 19. To this end, the monitoring node 39 may retrieve measurement data from the access node 17 and calculate optimized configuration parameters for the access node 17 and finally update the configuration of the access node 17 with the optimized configuration parameters. For retrieving the measurement data and for modifying the configuration parameters, monitoring station 39 may access the access node 17 over the interconnection network 41 using a suitable communication protocol such as the Simple Network Management Protocol (SNMP), the Trivial File Transfer Protocol (TFTP) or any other protocol supported by the access node 17 and the interconnection network 41.

The DLM operations may further include stabilization measures. Stabilization measures comprise surveying so called stability parameters of the individual telecommunication lines and detect that a line 13, 36 has become unstable if the stability parameters are outside of a pre-defined range. If an instable line 13, 36 has been detected, the monitoring node 39 may modify the configuration of the access node 17 such that the respective line 13, 36 becomes stable again. For example, the monitoring node 39 may modify the configuration of the access node 17 such that the maximum bit rate R of the affected line 13, 36 is reduced and the stability parameters have returned into the pre-defined range.

When performing DLM (e. g. stabilization and/or optimization), any type of stability parameters may be considered. For example, a meantime between transmission errors (MTBE) or a meantime between resynchronization of the two modem circuitries 23 and 33 with each other (MTBR) may be considered. However, the present invention is not limited to these exemplary parameters.

This DLM approach comprising optimization and stabilization measures works well if the physical characteristics of a line 13, 36 are rather static and change at most rarely. However, difficulties may arise if the physical characteristics of the lines 13, 36 change transitorily due to a transitory external influence to at least one of the lines 13, 36. Such a transitory influence is further referred to as transitory disturbance. The main causes of transitory disturbances are sudden weather condition changes.

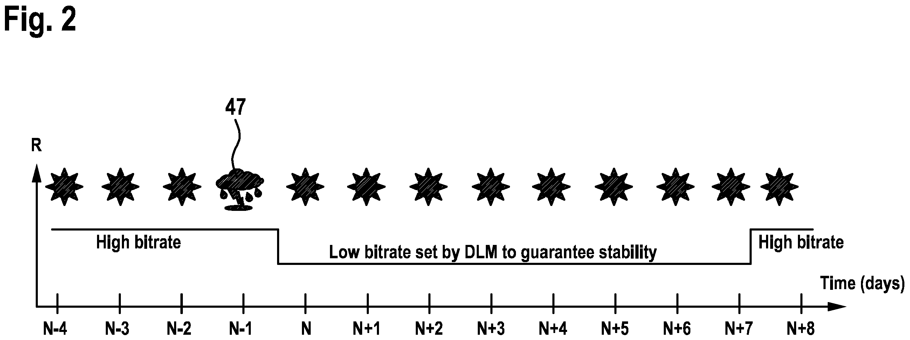

Conventional DLM approaches cannot optimally cope with transitory disturbances because stabilization works in a rather short time frame whereas optimization is performed over a comparatively long time interval. Figure 2 shows an exemplary scenario where DLM stabilization measures have reduced the maximum bit rate R after a transitory disturbance 47 has occurred. The diagram of Figure 2 shows the maximum bit rate R of the first telecommunication line 13 over several days. At day N-1, the transitory disturbance 47 occurs (e. g. lightning). As a consequence, stability parameters at least of the line 13, but probably also neighbouring lines 36, leave pre-defined range and the monitoring station 39 detects that the respective line 13, 36 is instable and reduces the bit rate, i.e. the DLM sets a low maximum bit rate R to guarantee stability. Although the transitory disturbance 47 takes only a short time (e.g. an hour or one day), the bit rate R is reduced during several days until optimization measures of the DLM increase it again at day N+7.

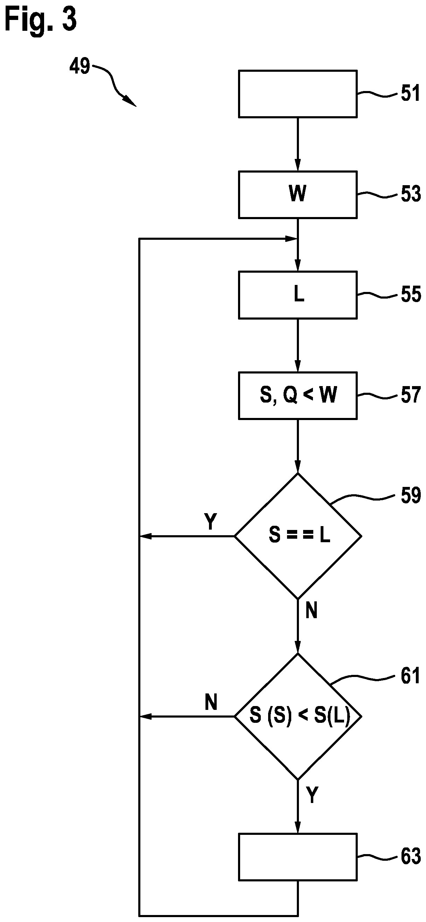

Figure 3 shows a flowchart of a method 49 for analyzing and diagnosing physical media, such as the telecommunication lines 13, 36, of the network 11, which method 49 allows for preventing the above described long-lasting reduction of maximum bit rate R of the individual lines 13, 36. Basically, the method 49 detects the transitory disturbance 47 by means of statistical analysis of a parameter that characterizes the performance of at least one telecommunication line 13, 36 and prevents DLM stabilization measures if a transitory disturbance 47 is detected. Preferably, said parameter is a stability parameter.

After a start 51, the method 49 determines a time window W used for determining a long-term statistical distribution L, also referred to as reference distribution (step 53). This time window W may be several days, e. g. three days to ten days.

Then a step 55 is executed, that collects at least one parameter that characterizes the transmission characteristics of the telecommunication line 13, 36. For example, values of a stability parameter, e. g. MTBE or MTBR, may be collected. The method 49 may retrieve these parameters from the access node 17. Step 55 further determines the reference distribution L using the value of the parameter collected within the determined time window W. In the shown embodiment, a single long-term distribution L is calculated in step 55 related to a single value, preferably a single stability value. In another embodiment multiple long-term distributions related to different parameters may be determined.

In an exemplary embodiment, the method 49 executes step 55 repeatedly so that the long-term distribution L is calculated repeatedly using up-to-date values of the collected parameters related to the time window W ending at the current execution time of the method 49, i.e. at the moment when the method 49 is executed.

Then the method 49 may execute the further step 57 that determines a short-term distribution S of at least one parameter that characterizes the transmission characteristics of the lines 13, 36. The short-term statistical distribution S calculated in step 57 should refer to the same parameter as the long-term distribution L calculated in step 55. The short-term distribution is determined for a time window Q that is shorter than the time window W used for calculating the long-term statistical distribution L. The time window Q during which the values for the short-term distribution S are sampled may end at the current execution time of the method 49. For example, the time window Q for calculating the short-term distribution S may be one day. Thus, the short-term distribution S may be calculated for the previous day.

The method 49 may comprise a step 59 that may be executed after the step 57 that compares the long-term distribution L with the short-term distribution S. If this comparison shows that the distributions L, S are not equal with respect to each other (N), then the method 49 executes the step 61. Otherwise (Y), the method 49 branches back to step 55. In embodiments with multiple short-term and long-term distributions S, L, the short-term and long-term distributions related to the same parameter may be compared with each other and the determination of step 49 may be carried out depending on the comparisons of the individual pairs of distributions.

The comparison of the two distributions L, S related to the same parameter may be carried out by means of statistical test methods such as parametric tests (e. g. Student's t-test) or non-parametric tests (e. g. Kolmogorov-Smirnov test). Further examples of non-parametric tests are the Wilcoxon Rank Sum Test or the Mann-Whitney U Test; the Kuiper's test; or the Cramér-von Mises test. Exemplary statistical test methods and how to apply them on the determined distributions are described in the published patent application EP 2 538 568 A1: "A tool and method for analysing and diagnosing physical media in an access network".

Step 61 checks whether the short-term distribution S characterizes a lower stability level s(S) than a stability level s(L) of the long-term distribution L. If so (Y), a step 63 is executed. Otherwise (N), the method 49 continues with step 55.

A first statistical distribution (e.g. the short-term distribution) of the stability parameter considered in the present example is considered to characterize a lower level of stability level than second statistical distribution (e.g. the long-term distribution) of the same stability parameter if the first distribution is shifted to the left with respect to the second distribution.

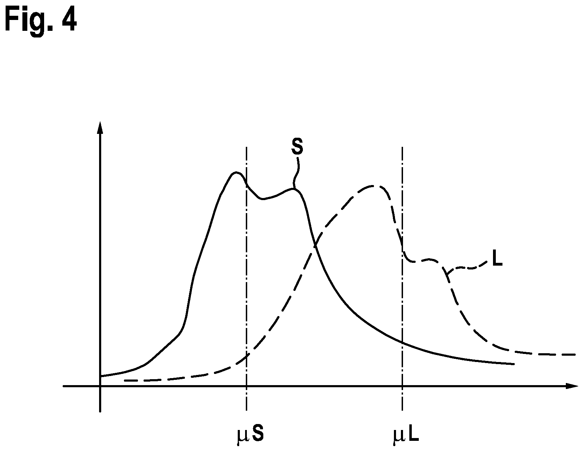

Figure 4 shows an illustrative diagram of the long-term distribution L of the MTBE parameter (dashed line). In addition, the short-term distribution S of the same parameter MTBE during a transitory disturbance is depicted in the same diagram (solid line). The short-term distribution S is shifted to the left with respect to the long-term distribution L. The statistical distribution S is considered referring to a lower stability level than the long-term statistical distribution L, s(S) < S(L). Consequently, assuming the distributions shown in Figure 4, step 61 would conclude that the stability level s(S) of the short-term statistical distribution S is lower than the stability level s(L) of the long-term statistical distribution L and continue with step 63.

In an embodiment, step 61 decides on whether or not the short-term statistical distribution S is located to the left with respect to the long-term statistical distribution L depending on at least one location parameter of the respective distributions L, S. For example the mean value or a median of the distributions L, S can be compared with each other; a lower mean value or median corresponds to a lower stability level. In the example shown in Figure 4, the mean value µS of the short-term distribution S is less than the mean value µL of the long-term distribution L, µS < µL. Thus, step 61 may conclude that the short-term distribution S is shifted to the left with respect to the long-term distribution L and has therefore a lower stability level s(S) than the stability level s(L) of the long-term distribution L.

In another embodiment, a statistical location test may be applied to compare the distributions (L, S) with each other, as regards their location relative to each other. For example the Student's t-test, in particular, a two-sample t-test, may be applied. However, the present invention is not limited to this special test method. Any different test method may be applied, such as the Mann-Whitney U-test that allows determining whether a first distribution is shifted with respect to a second distribution.

In step 63, the method 49 prevents DLM stabilization measures. Basically, the method decides in steps 59 and 61 on whether or not a change in stability parameters is caused by the transitory disturbance 47. If so, DLM stabilization measures are prevented in order to avoid the long-lasting decrease of the maximum bit rate illustrated in Figure 2. If step 59 concludes that the two distributions (S, L) are not equal to each other then step 61 is executed. If step 61 decides that the short-term distribution S has not a lower stability level than the long-term distribution L, then the method 41 does not execute step 63 so that stabilization measures can be executed. As a consequence, DLM stabilization measures continue if the difference between the short-term distribution S and the long-term distribution L detected in step 59 is due to stability improvement (instead of stability decrease).

In the shown example, step 61 checks if the short-term statistical distribution is shifted to the left with respect to the long-term statistical distribution because a displacement of the distribution of the considered stability parameter MTBE to the left corresponds to a decrease of a stability level of the line 13. However, when choosing another stability parameter, the direction of displacement that indicates a lower stability level or a decrease of stability may be the opposite direction, i.e. the right direction. In an embodiment that applies such a stability parameter (e.g. a number of transmission errors in a predefined time interval), step 61 checks whether the short-term distribution S is located to the right with respect to the long-term distribution L.

As shown in Figure 3, the steps 55 to 63 may be executed repeatedly in order to guarantee a continuous surveillance of the individual lines 13, 36 of the network 11.

It should be noted that step 61 is optional. In an embodiment, the method 49 executes immediately step 63 if step 59 decides that the distribution S, L are not equal to each other.

It should further be noted that step 61 is a refinement of the method 49 that considers the fact that the long-term distribution L is not only influenced by the values of the parameter collected during normal operation of the network 11 but also during the transitory disturbance 47. If the time window W for which the long-term distribution is collected includes values collected during a transitory disturbance 47, step 59 may detect a difference between the long-term distribution L and the short-term distribution S although stabilization should not be prevented. Step 61 detects these situations thereby improving the reliability of the method 49.

To sum up, the embodiment of the invention described herein allows avoiding an unnecessary stabilization measure during or after a transitory disturbance 47. If the transitory disturbance 47, e. g. a meteorological phenomenon occurs, the transitory disturbance 47 will impact the majority of lines 13, 36 in a specific geographical region (e. g. one or more binders 35 connected to the access node 17). The transitory disturbance 47 typically leads to an abnormal decrease of stability parameters, such as the MTBE or the MTBR. By comparing the long-term statistical distribution L with the short-term statistical distribution S, the method 49 may detect a sudden variation of the distribution of e. g. a stability parameter (MTBE, MTBR) because the distributions L, S are determined for different time windows. If the two distributions are statistically different, DLM stabilization measures may be prevented for a certain time interval, for example for the current day.

## Claims

1. Method (49) for analysing and/or diagnosing physical media (13, 36) in an access network (11), **characterized in that** the method (49) comprises
- determining (55) a long-term statistical distribution (L) of a parameter that characterises the performance of at least one telecommunication line (13, 36) of the network (11);
- determining (57) a short-term statistical distribution (S) of the parameter, wherein the short-term statistical distribution (S) is determined for a time window (Q) that is shorter than a further time window (W) used for calculating the long-term distribution (L);
- comparing (59, 61) the long-term statistical distribution (L) with the short-term statistical distribution (S); and
- detecting (63) a transitory disturbance (47) in the at least one telecommunication line (13, 36) depending on said comparing (59).

2. Method (49) according to claim 1, wherein the method (49) comprises preventing (63) stabilisation measures related to the at least one telecommunication line (13, 36) when the transitory disturbance (47) is detected.

3. Method (49) according to claim 1 or 2, wherein the determining (57) the long-term statistical distribution (L) comprises collecting values of the parameter during a first time window (W) and/or determining (57) the short-term statistical distribution (S) comprises collection the values of the parameter during a second time window (Q), the second time window (Q) being shorter than the first time window (W).

4. Method (49) according to one of the precedent claims, wherein the comparing (59) comprises applying a statistical test method on the two statistical distributions (L, S).

5. Method (49) according to claim 4, wherein the statistical test method includes a non-parametric test, preferably a Wilcoxon Rank Sum test, a Mann-Whitney U test, a Kolmogorov-Smirnov test, a Kuiper's test and/or a Cramér-von-Mises test.

6. Method (49) according to claim 4, wherein the statistical test method includes a parametric test, preferably, a Student's t-test.

7. Method (49) according to one of the precedent claims, wherein the comparing comprises deciding (61) on whether or not the short-term statistical distribution (S) is displaced with respect to the long-term statistical distribution (L) in a direction that indicates that a stability level (µS) related to the short-term distribution (S) is lower than the stability level (µL) related to the long-term distribution (L).

8. Method (49) according to claim 7, wherein the method (49) comprises continuing the stabilisation measures if a result of said deciding (61) is that the short-term statistical distribution (S) is not displaced with respect to the long-term statistical distribution (L) in said direction.

9. Method (49) according to claim 7 or 8, wherein said deciding (61) comprises comparing location parameters (µL, µS) of the two distributions (L, S) with each other and/or applying a statistical location test to the two distributions (L, S).

10. Method (49) according to one of the precedent claims, wherein the at least one parameter includes a Mean Time Between Errors, MTBE, a Mean Time Between Resynchronisations, MTBR, a maximum bit rate (R) of a telecommunication line (13, 36) of the network (11) and/or an average maximum bit rate of multiple telecommunication lines (13, 36) of the network (11).

11. Device (25, 31, 43) for analysing and/or diagnosing physical media (13, 36) in an access network (11), **characterized in that** the device (25, 31, 43) is operable for
- determining (55) a long-term statistical distribution (L) of a parameter that characterises the performance of at least one telecommunication line (13, 36) of the network (11);
- determining (57) a short-term statistical distribution (S) of the parameter, wherein the short-term statistical distribution (S) is determined for a time window (Q) that is shorter than a further time window (W) used for calculating the long-term distribution (L);
- comparing (59, 61) the long-term statistical distribution (L) with the short-term statistical distribution (S); and
- detecting (63) a transitory disturbance (47) in the at least one telecommunication line (13, 36) depending on said comparing (59).

12. Device (25, 31, 43) according to claim 11, wherein the device is operable, preferably programmed, for executing a method according to one of claims 1 to 10.

13. Monitoring station (39) for analysing and/or diagnosing physical media (13, 36) in an access network (11), the monitoring station (39) comprising a device (25, 31, 43) according to claim 11 or 12.

14. Computer program product, preferably a computer readable storage medium (29), comprising a computer program that is programmed for executing a method (49) according to one of claims 1 to 10 when run on a computer (25, 31, 43).

## Patentansprüche

1. Verfahren (49) zum Analysieren und/oder Diagnostizieren physischer Medien (13, 36) in einem Zugangsnetzwerk (11), **dadurch gekennzeichnet, dass** das Verfahren (49) umfasst
- Bestimmen (55) einer statistischen Langzeitverteilung (L) eines Parameters, der die Leistung mindestens einer Telekommunikationsleitung (13, 36) des Netzwerks (11) kennzeichnet;
- Bestimmen (57) einer statistischen Kurzzeitverteilung (S) des Parameters, wobei die statistische Kurzzeitverteilung (S) bestimmt wird für ein Zeitfenster (Q), das kürzer ist als ein weiteres Zeitfenster (W), das verwendet wird zum Berechnen der Langzeitverteilung (L);
- Vergleichen (59, 61) der statistischen Langzeitverteilung (L) mit der statistischen Kurzzeitverteilung (S); und
- Erkennen (63) einer transitorischen (47) Störung in der mindestens einen Telekommunikationsleitung (13, 36) in Abhängigkeit von besagtem Vergleich (59).

2. Verfahren (49) nach Anspruch 1, wobei das Verfahren (49) umfasst das Verhindern (63) von Stabilisationsmaßnahmen, die verbunden sind mit der mindestens einen Telekommunikationsleitung (13, 36), wenn die transitorische Störung (47) erkannt wird.

3. Verfahren (49) nach Anspruch 1 oder 2, wobei das Bestimmen (57) der statistischen Langzeitverteilung (L) umfasst das Sammeln von Werten des Parameters während eines ersten Zeitfensters (W) und/oder das Bestimmen (57) der statistischen Kurzzeitverteilung (S) eine Sammlung der Werte des Parameters während eines zweiten Zeitfensters (Q) umfasst, wobei das zweite Zeitfenster (Q) kürzer ist als das erste Zeitfenster (W).

4. Verfahren (49) nach einem der vorhergehenden Ansprüche, wobei das Vergleichen (59) umfasst das Anwenden eines statistischen Testverfahrens auf die zwei statistischen Verteilungen (L, S).

5. Verfahren (49) nach Anspruch 4, wobei das statistische Testverfahren einen nicht parametrischen Test einschließt, bevorzugt einen Wilcoxon-Rangsummentest, einen Mann-Whitney-U-Test, einen Komogorow-Smirnow-Test, einen Kuiper-Test und/oder einen Cramer-von-Mises-Test.

6. Verfahren (49) nach Anspruch 4, wobei das statistische Testverfahren einen parametrischen Test einschließt, bevorzugt einen Student-T-Test.

7. Verfahren (49) nach einem der vorhergehenden Ansprüche, wobei das Vergleichen umfasst das Entscheiden (61), ob die statistische Kurzzeitverteilung (S) verschoben ist hinsichtlich der statistischen Langzeitverteilung (L) in einer Richtung, die anzeigt, dass eine Stabilitätsstufe (µS), die verbunden ist mit der Kurzzeitverteilung (S), niedriger ist als die Stabilitätsstufe (µL), die verbunden ist mit der Langzeitverteilung (L).

8. Verfahren (49) nach Anspruch 7, wobei das Verfahren (49) umfasst das Fortfahren mit den Stabilitätsmaßnahmen, wenn ein Ergebnis besagten Entscheidens (61) darin besteht, dass die statistische Kurzzeitverteilung (S) nicht verschoben ist hinsichtlich der statistischen Langzeitverteilung (L) in besagter Richtung.

9. Verfahren (49) nach Anspruch 7 oder 8, wobei besagtes Entscheiden (61) umfasst das Vergleichen von Ortsparametern (µL, µS) der zwei Verteilungen (L, S) miteinander und/oder Anwenden eines statistischen Ortstests auf die zwei Verteilungen (L, S).

10. Verfahren (49) nach einem der vorhergehenden Ansprüche, wobei der mindestens eine Parameter MTBE (Mean Time Between Errors), MTBR (Mean Time Between Resynchronisations), eine maximale Bitrate (R) einer Telekommunikationsleitung (13, 36) des Netzwerks (11) und/oder eine durchschnittliche maximale Bitrate mehrerer Telekommunikationsleitungen (13, 36) des Netzwerks (11) einschließt.

11. Gerät (25, 31, 43) zum Analysieren und/oder Diagnostizieren physischer Medien (13, 36) in einem Zugangsnetzwerk (11), **dadurch gekennzeichnet, dass** das Gerät (25, 31, 43) betreibbar ist zum
- Bestimmen (55) einer statistischen Langzeitverteilung (L) eines Parameters, der die Leistung mindestens einer Telekommunikationsleitung (13, 36) des Netzwerks (11) kennzeichnet;
- Bestimmen (57) einer statistischen Kurzzeitverteilung (S) des Parameters, wobei die statistische Kurzzeitverteilung (S) bestimmt wird für ein Zeitfenster (Q), das kürzer ist als ein weiteres Zeitfenster (W), das verwendet wird zum Berechnen der Langzeitverteilung (L);
- Vergleichen (59, 61) der statistischen Langzeitverteilung (L) mit der statistischen Kurzzeitverteilung (S); und
- Erkennen (63) einer transitorischen (47) Störung in der mindestens einen Telekommunikationsleitung (13, 36) in Abhängigkeit von besagtem Vergleich (59).

12. Gerät (25, 31, 43) nach Anspruch 11, wobei das Gerät betreibbar ist, bevorzugt programmiert, zum Ausführen eines Verfahrens nach einem der Ansprüche 1 bis 10.

13. Überwachungsstation (39) zum Analysieren und/oder Diagnostizieren physikalischer Medien (13, 36) in einem Zugangsnetzwerk (11), wobei die Überwachungsstation (39) ein Gerät (25, 31, 43) nach Anspruch 11 oder 12 umfasst.

14. Computerprogramm-Produkt, bevorzugt ein computerlesbares Speichermedium (29), umfassend ein Computerprogramm, das programmiert ist zum Ausführen eines Verfahrens (49) nach einem der Ansprüche 1 bis 10, wenn es auf einem Computer (25, 31, 43) ausgeführt wird.

## Revendications

1. Procédé (49) d'analyse et/ou de diagnostic de support physique (13, 36) dans un réseau d'accès (11), **caractérisé en ce que** le procédé (49) comprend les étapes suivantes :
- déterminer (55) une distribution statistique à long terme (L) d'un paramètre qui caractérise le fonctionnement d'au moins une ligne de télécommunication (13, 36) du réseau (11) ;
- déterminer (57) une distribution statistique à court terme (S) du paramètre, la distribution statistique à court terme (S) étant déterminée pour une fenêtre temporelle (Q) qui est plus étroite qu'une autre fenêtre temporelle (W) utilisée pour calculer la distribution à long terme (L) ;
- comparer (59, 61) la distribution statistique à long terme (L) avec la distribution statistique à court terme (S) ; et
- détecter (63) une perturbation transitoire (47) sur la ou les lignes de télécommunication (13, 36) en fonction de ladite comparaison (59).

2. Procédé (49) selon la revendication 1, dans lequel le procédé (49) prévoit d'empêcher (63) des mesures de stabilisation relatives à la ou aux lignes de télécommunication (13, 36) lorsque la perturbation transitoire (47) est détectée.

3. Procédé (49) selon la revendication 1 ou 2, dans lequel la détermination (57) de la distribution statistique à long terme (L) comprend la collecte de valeurs du paramètre durant une première fenêtre temporelle (W) et/ou la détermination (57) de la distribution statistique à court terme (S) comprend la collecte de valeurs du paramètre durant une deuxième fenêtre temporelle (Q), la deuxième fenêtre temporelle (Q) étant plus étroite que la première fenêtre temporelle (W).

4. Procédé (49) selon l'une des revendications précédentes, dans lequel la comparaison (59) comprend l'application d'un procédé de test statistique aux deux distributions statistiques (L, S).

5. Procédé (49) selon la revendication 4, dans lequel la méthode de test statistique inclut un test non paramétrique, de préférence un test des rangs signés de Wilcoxon, un test Mann-Whitney U, un test Kolmogorov-Smirnov, un test de Kuiper et/ou un test de Cramer-Von Mises.

6. Procédé (49) selon la revendication 4, dans lequel le procédé de test statistique inclut un test paramétrique, de préférence un test t de Student.

7. Procédé (49) selon l'une des revendications précédentes, dans lequel la comparaison comprend l'étape consistant à décider (61) si oui ou non la distribution statistique à court terme (S) est décalée par rapport à la distribution statistique à long terme (L) dans une direction qui indique qu'un niveau de stabilité (µS) relatif à la distribution à court terme (S) est inférieur au niveau de stabilité (µL) relatif à la distribution à long terme (L).

8. Procédé (49) selon la revendication 7, dans lequel le procédé (49) comprend la poursuite des mesures de stabilisation si le résultat de ladite étape de prise de décision (61) est que la distribution statistique à court terme (S) n'est pas décalée par rapport à la distribution statistique à long terme (L) dans ladite direction.

9. Procédé (49) selon la revendication 7 ou 8, dans lequel ladite étape de prise de décision (61) comprend la comparaison des paramètres de position (µL, µS) des deux distributions (L, S) l'une par rapport à l'autre et/ou l'application d'un test de position statistique aux deux distributions (L, S).

10. Procédé (49) selon l'une des revendications précédentes, dans lequel le ou les paramètres incluent un temps moyen entre erreurs, MTBE, un temps moyen entre resynchronisations, MTBR, un débit binaire maximal (R) d'une ligne de télécommunication (13, 36) du réseau (11) et/ou un débit binaire maximal moyen de lignes de télécommunication (13, 36) multiples du réseau (11).

11. Dispositif (25, 31, 43) d'analyse et/ou de diagnostic de support physique (13, 36) dans un réseau d'accès (11), **caractérisé en ce que** le dispositif (25, 31, 43) est conçu pour :
- déterminer (55) une distribution statistique à long terme (L) d'un paramètre qui caractérise le fonctionnement d'au moins une ligne de télécommunication (13, 36) du réseau (11) ;
- déterminer (57) une distribution statistique à court terme (S) du paramètre, la distribution statistique à court terme (S) étant déterminée pour une fenêtre temporelle (Q) qui est plus étroite qu'une autre fenêtre temporelle (W) utilisée pour calculer la distribution à long terme (L) ;
- comparer (59, 61) la distribution statistique à long terme (L) avec la distribution statistique à court terme (S) ; et
- détecter (63) une perturbation transitoire (47) sur la ou les lignes de télécommunication (13, 36) en fonction de ladite comparaison (59).

12. Dispositif (25, 31, 43) selon la revendication 11, dans lequel le dispositif est conçu, de préférence programmé, pour exécuter un procédé selon l'une des revendications 1 à 10.

13. Station de surveillance (39) destinée à l'analyse et/ou au diagnostic de support physique (13, 36) dans un réseau d'accès (11), la station de surveillance (39) comprenant un dispositif (25, 31, 43) selon la revendication 11 ou 12.

14. Produit-programme informatique, de préférence un support de stockage lisible par un ordinateur (29), comprenant un programme informatique qui est programmé pour exécuter un procédé (49) selon l'une des revendications 1 à 10 lorsqu'il est exécuté sur un ordinateur (25, 31, 43).
